# EUROPEAN PATENT SPECIFICATION

(11) **EP 1 764 399 B1**
(45) Date of publication and mention of the grant of the patent: **19.05.2010**
(21) Application number: 06019291.1
(22) Date of filing: 14.09.2006
(51) Int. Cl.: C09J 7/02, C09J 11/08

(54) **Thermosensitive adhesive component, and thermosensitive adhesive label sheet**
Wärmeempfindliche Klebekomponente und wärmeempfindliche Klebeetikettfolie
Composant adhésif thermosensible et feuille d'étiquettes adhésives thermosensibles

(30) Priority: 15.09.2005 JP 2005269226
(43) Date of publication of application: 21.03.2007
(73) Proprietor: Ricoh Company, Ltd., Tokyo 143-8555 (JP)
(72) Inventor: Kitano, Tohru, Tokyo 143-8555 (JP); Kugoh, Tomoyuki, Tokyo 143-8555 (JP); Inaba, Norihiko, Tokyo 143-8555 (JP)
(74) Representative: Barz, Peter

(56) References cited:
- EP-A1- 1 193 284

## Description

### BACKGROUND OF THE INVENTION

### Field of the Invention

The present invention relates to a thermosensitive adhesive component and a thermosensitive adhesive label sheet formed thereof.

### Discussion of the Background

Recently, adhesive label sheets have been increasingly used as price display labels, product display (barcode) labels, quality display labels, metric display labels, advertisement labels (sticker), etc. Recording systems used for these labels have a wide variety, for example, an ink jet recording system, a thermosensitive recording system, and a pressure sensitive recording system. Therefore, commonly-used adhesive sheets have a structure in which an adhesive agent layer and a peeling sheet are layered to the other side of the information recording side. These sheets are widely used because such a sheet can be easily attached just by peeling the peeling sheet from the label and pressing the label when attaching the sheet. However, once the peeling sheet of an adhesive sheet having such a typical structure is detached, the peeling sheet is hardly retrieved for reuse but disposed in a wasted manner. In recent years, a thermosensitive adhesive sheet which is not adhesive at room temperature has been a center of attention because such a peeling sheet is not necessitated.

A thermally activated adhesive agent, as described in "Adhesiveness Handbook" (12th edition, Page 131 to 135, published by Polymer Publication Association in 1980), basically contains a thermoplastic resin and a hot-melt material such as a solid plasticizing agent and optionally an adhesiveness imparting agent, etc. Thermoplastic resins are used for imparting adhesion and cohesion. A hot-melt material is solid at room temperature and therefore does not impart a plastic property to a resin containing the hot-melt material but is adhesive when the resin is swollen or softened by heating and melting. In addition, adhesiveness imparting agents have a function of improving adhesiveness. Hot-melt materials contained in thermally activated materials are fused upon application of heat and slowly crystallized thereafter. Therefore, such materials can sustain its adhesiveness for a long time after a heat source is removed.

In spite of this advantage of thermosensitive adhesive materials, some of the typical thermosensitive adhesive materials have drawbacks.

One of such drawbacks is blocking. Blocking is a phenomenon of occurrence of unintentional adhesiveness. Blocking may occur, for example, when a thermosensitive material is exposed in an atmosphere having a temperature higher than room temperature for a long time. When a thermosensitive material is held in a rolled state or a state in which the thermosensitive material is cut to sheet form from the rolled state and the obtained sheets are layered, the thermosensitive adhesive layer and the outside surface (the side opposite of the thermosensitive adhesive layer relative to the substrate) are attached to each other once blocking occurs. This causes a problem in feeding paper and has an adverse impact on the printing on the outside surface.

As a method of preventing blocking, examined published Japanese patent application No. S62-21835 describes a method in which a lubricant wax is mixed in a thermosensitive adhesive agent. In addition, unexamined published Japanese patent applications Nos. (hereinafter referred to as JOP) H06-57223, H06-100847 and H06-100848 describe methods in which blocking is prevented by protecting the surface of a solid plasticizing agent by an inorganic compound and colloidal particles to restrain the softening of the solid plasticizing agent. However, when such a wax is added, the effect of preventing blocking is not sufficient and the adhesiveness decreases to the contrary. When the surface of a solid plasticizing agent is protected by such an inorganic compound and colloidal particles, it takes a long time to fuse and diffuse the solid plasticizing agent so that the adhesiveness of the theremosensitive adhesive agent does not easily appear, which may lead to practical problems such that the adhesive performance deteriorates. A plasticizing agent having a high melting point can be used to prevent blocking. However, this causes a side effect such that the adhesiveness significantly deteriorates. Therefore, these thermosensitive adhesive materials are actually preserved and transferred at a low temperature at which blocking does not occur.

Japanese patent No. 2914029 (JOP H06-57226) and JOP H06-57233 describe usage of ethylene-vinyl acetate copolymer having a glass transition temperature not lower than 0 °C and a thermoplastic resin (excluding ethylene-vinyl acetate copolymer) having a glass transition point not lower than -5 °C. These materials have a relatively good adhesiveness for stainless steel, etc. However, these materials do not have a sufficient adhesiveness for a coarse surface material body such as corrugated board and therefore are not practically used. JOP 2002-105414 describes a thermosensitive adhesive material using a hindered phenol compound, a benzotriazole compound and an aromatic sulfonamide compound and hollow particles having a hollow ratio of 50 % in the undercoating layer. This thermosensitive adhesive material does not also have sufficient adhesiveness to a coarse surface material body such as corrugated board and does not prevent blocking in a satisfactory manner.

In addition, as a dispersant for a solid plasticizing agent, an anion emulsifying agent, a nonion emulsifying agent, a hydrosoluble resin, etc. are used. JOP 2003-216047 describes usage of, for example, sodium dioctyl sulfosuccinate. However, this material has a foaming problem. Further, JOP 2002-155264 describes a method in which a benzoic ester functioning as a solid plasticizing agent is dispersed by a copolymer containing carboxylic acid. But such a method is not practically sufficient in terms of blocking property. JOPs2004-211004 and 2005-002313 describe a method in which polyvinyl alcohol is used as a dispersant for a solid plasticizing agent. But again this method is not sufficient on the adhesiveness to a coarse surface material body such as corrugated board.

### SUMMARY OF THE INVENTION

Because of these reasons, the present inventors recognize that a need exists for a theremosensitive adhesive label sheet having a good adhesiveness to a coarse surface material body, for example, a corrugated board and a good anti-blocking property.

Accordingly, an object of the present invention is to provide a theremosensitive adhesive label sheet having a good adhesiveness to a coarse surface material body, for example, a corrugated board and a good anti-blocking property to address to environmental change.

Briefly this object and other objects of the present invention as hereinafter described will become more readily apparent and can be attained, either individually or in combination thereof, by a thermosensitive adhesive composition containing a thermoplastic resin, an adhesiveness imparting agent and a solid plasticizing agent containing a dispersing agent. Further, the dispersing agent is a polyvinyl alcohol based resin having a weight average molecular weight of from 11,000 to 39,000.

It is preferred that, in the thermosensitive adhesive composition mentioned above, the saponification ratio of the polyvinyl alcohol based resin is not less than 70 %.

It is still further preferred that, in the thermosensitive adhesive composition mentioned above, the ratio of the dispersing agent is from 2 to 10 parts by weight based on 100 parts by weight of the solid plasticizing agent.

It is still further preferred that, in the thermosensitive adhesive composition mentioned above, the glass transition point of the thermoplastic resin is from - 65 to -5 °C.

As another aspect of the present invention, a thermosensitive adhesive label sheet is provided which includes a substrate and the thermosensitive adhesive composition mentioned above layered on the first side of the substrate.

It is preferred that thermosensitive adhesive label sheet further mentioned above includes an undercoating layer containing a thermoplastic resin provided between the thermosensitive adhesive composition and the substrate.

It is still further preferred that the thermosensitive adhesive label sheet mentioned above further includes a thermosensitive recording layer containing a leuco dye and a coloring developing agent, which is provided on a second side of the substrate.

It is still further preferred that, in the thermosensitive adhesive label sheet mentioned above, an ink image developed by an ultraviolet curable ink is provided on the second side of the substrate.

It is still further preferred that the thermosensitive adhesive label sheet mentioned above is rolled up.

It is still further preferred that the thermosensitive adhesive label sheet mentioned above is rolled round a core material.

These and other objects, features and advantages of the present invention will become apparent upon consideration of the following description of the preferred embodiments of the present invention.

### DETAILED DESCRIPTION OF THE INVENTION

The thermosensitive adhesive label sheet of the present invention will be described below in detail with reference to several embodiments

The thermosensitive adhesive label sheet of the present invention is a thermosensitive adhesive label sheet in which a thermosensitive adhesive composition layer containing a thermoplastic resin, an adhesiveness imparting agent and a solid plasticizing agent containing a dispersant is provided on a side of a substrate. As the dispersant in the solid plasticizing agent in the thermosensitive adhesive composition layer, a polyvinyl alcohol based resin having a weight average molecular weight of from 11,000 to 39,000 is used. Therefore, the thermosensitive adhesive composition layer is easily fluidized when heated and fused. As a result, the thermosensitive adhesive label sheet tends to be adhered to a coarse surface material body such as corrugated board so that the adhesiveness thereof can be kept at a good level without deterioration after the label sheet is attached.

Preferred specific examples of the thermoplastic resins for use in the thermosensitive adhesive composition layer containing the thermoplastic resins, adhesiveness imparting agents and solid plasticizing agents include natural rubber latex in which vinyl based monomers are graft copolymerized, acrylic ester copolymers, methacrylic ester copolymers, copolymers of an acrylic ester and a methacrylic ester, copolymers of an acrylic ester and styrene, copolymers of an acrylic ester, a methacrylic ester and styrene, and copolymers of ethylene and vinyl acetate. These can be used alone or in combination. In addition, the glass transition temperature of the thermoplastic resin is preferably from -65 to -5 °C. The glass transition temperature that is too high causes deterioration of the adhesiveness. The glass transition temperature that is too low causes deterioration of anti-blocking property.

The amount of application of the thermosensitive adhesive composition layer is from 5 to 35 g/m², and preferably from 10 to 25 g/m² in a dry state. When the amount of application of the thermosensitive adhesive composition layer is too small, the adherence effect tends to be not sufficient when adhered upon application of heat. To the contrary, when the amount of application of the thermosensitive adhesive composition layer is too large, the adherence performance is saturated, which is not economically preferred.

The content of the thermoplastic resin contained in the thermosensitive adhesive composition layer is preferably from 15 to 50 weight %, and more preferably from 20 to 50 weight %. The content of the thermoplastic resin that is too small leads to deterioration of adhesiveness performance, which is not preferred.

The content of the thermoplastic resin that is too large causes problems such that the layer is adhesive at a typical preservation temperature, i.e., blocking occurs.

Compounds that are solid at room temperature and melted and fused upon application of heat are used as the solid plasticizing agent for use in the present invention. The melting point thereof is preferably not lower than 70 °C and more preferably not lower than 80 °C. The upper limit thereof is about 200 °C. The melting point that is too low causes problems such that the obtained thermosensitive adhesive composition is adhesive at a typical preservation temperature, i.e., blocking occurs.

Also, there are manufacturing problems such that when a liquid of application of a thermosensitive adhesive composition is applied to a substrate and dried thereafter, the coated layer becomes adhesive. When the melting point is too high, a massive amount of energy is required to make the coated layer adhesive, which leads to a practical problem. In addition, when a thermal recording paper is used as a substrate and a massive amount of energy is used to make the coated layer adhesive, the thermal recording layer is colorized, which leads to a problem that printed images are hardly readable.

In the thermosensitive adhesive composition layer for use in the present invention, the content of the solid plasticizing agent contained in the thermosensitive adhesive composition is preferably from 25 to 80 weight % and more preferably from 40 to 75 weight %. The content of the solid plasticizing agent that is too small causes problems such that the solid plasticizing agent is adhesive at a typical preservation temperature, i.e., blocking occurs. The content of the solid plasticizing agent that is too large may cause deterioration of adhesibility.

Next, specific examples of the solid plasticizing agent for use in the thermosensitive adhesive composition layer in the present invention include dicyclohexyl phthalate (melting point: 65 °C); diphenyl phthalate (melting point: 73 °C); N-cyclohexyl-p-toluene sulfonamide (melting point: 86 °C); sucrose benzoate (melting point: 98 °C); ethyleneglycol dibenzoate (melting point: 70 °C); trimethylolethane tribenzoate (melting point:73°C); pentaerythritol tetrabenzoate (melting point: 95 °C); sucrose octaacetate (melting point: 89 °C); catechol dibenzoate (melting point: 86 °C); hindered phenol based compounds, for example, triethylene glycol bis[3-(3-t-butyl-4-hydroxy-5-methylphenyl) propionate] (melting point: 77 °C), and 1,6-hexane diolbis[3-(3,5-di-t-butyl-4-hydroxyphenyl)propionate] (melting point: 103 °C); and triazol compounds, for example, 2-[5'-(1",1", 3"-3"-tetramethylbutyl)-2'-hydroxyphenyl] benzotriazol (melting point: 103 °C), 2-[3',5'-di-(2",2"-dimethylpropyl)-2'-hydroxyphenyl]benzo triazol (melting point: 80 °C), 2-(3'-t-butyl-5'-methyl-2'hydroxyphenyl)-5-chlorobenzo triazol (melting point: 138 °C), 2-(3,5-di-t-butyl-2-hydroxyphenyl)-5-chlorobenzotriazol (melting point: 155 °C), 2-(5-methyl-2-hydroxyphenyl)benzotriazol (melting point: 130 °C), and 2-(3,5-di-t-amil-2-hydroxyphenyl)benzotriazol (melting point: 80 °C).

Among these compounds, in terms of the stability of adhesibility over a long period of time after application of heat, hindered phenol based compounds and triazol based compounds are preferably used. These compounds can be used in combination to maintain the amorphous state of a thermosensitive adhesive composition layer after application of heat and to further improve the duration of the stability of the adhesibility.

These solid plasticizing agents and compounds are finely pulverized by a wet or dry pulverizer, e.g., a ball mill, a sand mill, a paint shaker, a dino mill, an attritor, and a HENSCHEL mixer and the finely pulverized particles are used as an aqueous dispersion. These compounds and agents can be also micro-capsulated by a known method for use. The particle diameter of the solid plasticizing agent is preferably not greater than 10 µm and more preferably not greater than 5 µm. Practically, the particle diameter is from 0.7 to 2 µm.

The thermosensitive adhesive composition layer can contain a super cooling agent in addition to a thermal plastic resin and a solid plasticizing agent. Such a super cooling agent can improve the super cooling property of the solid plasticizing agent and ameliorate the adhesibility thereof in a low temperature environment. Specific examples thereof include naphthol derivatives, e.g., 2-benzyloxynaphthalene; biphenyl derivatives, e.g., metaterphenyl, acetyl biphenyl, p-benzyl biphenyl and 4-aryloxybiphenyl; polyether compound, e.g., 1,2-bis(3-methylphenoxy)ethane, 2,2'-bis(4-methoxyphenoxy) diethylether and bis (4-methoxyphenyl) ether; diester derivatives of carboxylic acid or oxalic acid, e.g., diphenyl carboxylate, dibenzyl oxalate, di (p-chlorobenzyl) ester of oxalic acid and di (p-methylbenzyl) ester of oxalic acid. These can be used alone or in combination. Among these, diester derivatives of oxalic acid and biphenyl derivatives have a promotion effect on the super cooling property of a solid plasticizing agent.

Polyvinyl alcohol based resins are used as a dispersant for the solid plasticizing agent, which is an indispensable component of the present invention. These polyvinyl alcohol based resins can be manufactured by a known method. In addition to saponification compounds of polyvinyl acetates, monomers copolymerizable with other vinyl acetate esters can be contained in such a polyvinyl alcohol based resin. Specific examples of such monomers include olefins such as ethylene, propylene and isobutylene; unsaturated acids such as acrylic acid, methacrylic acid, crotonic acid, maleic acid, maleic anhydrate, and itaconic acid and their salts; nitriles such as acrylonitriles and methacrylonitriles; amides such as acryl amides and methacryl amides; and olefin sulfonic acids such as ethylene sulfonic acid, aryl sulfonic acid, andmetharyl sulfonic acid and their salts. In addition, these can be modified with, for example, methyl acetoacetic acid, ethyl acetoacetic acid and propyl acetoacetic acid. Among these monomers, olefin sulfonic acids and copolymers of their salts are preferred. This is because, since a solid plasticizing agent and a thermoplastic resin are well compatible with each other, adhesive properties upon application of heat is improved.

The polyvinyl alcohol based resin mentioned above for use in the present invention preferably has a weight average molecular weight of from 11,000 to 39,000.

When the weight average molecular weight thereof is too small, the adhesibility of the thermosensitive adhesive composition layer tends to be weak and the anti-blocking property significantly deteriorates. To the contrary, when the weight molecular weight thereof is too large, the anti-blocking property is excellent but the adhesibility to a coarse surface material body such as corrugated board deteriorates. Thereby, the adhesibility is rapidly lost during preservation especially after adhesion.

The addition amount of such a dispersant is preferably from 2 to 10 parts by weight based on 100 parts by weight of a solidplasticizing agent.

When the addition amount is too small, the solid plasticizing agent tends to be not sufficiently dispersed, which causes a problem in the production process. When the addition amount is too large, the adhesibility tends to deteriorate.

In addition, the saponification ratio of the polyvinyl alcohol based resin is preferably not lower than 70 %. When the saponification ratio is too small, the solubility of the dispersant in water tends to deteriorate. Thereby, it is difficult to disperse a solid plasticizing agent, which leads to trouble in the dispersion process.

The saponification represents what % of hydrolysable acetyl groups present in a vinyl acetate polymer or copolymer is hydrolyzed. When all the acetyl groups present in a vinyl acetate polymer or copolymer are changed to hydroxyl groups, the saponification is defined to be 100 %.

Further, to improve the adhesibility of the thermosensitive adhesive composition layer, it is possible to add an adhesion imparting agent thereto.

Various kinds of known compound can be used as an adhesion imparting agent. Specific examples thereof include rosin derivatives (e.g., rosin, polymerized rosins and hydrogenated rosins), terpene based resins (e.g., terpene resin, aromatic modified terpene resins, terpene phenol resins and hydrogen added terpene resins), petroleum resins, phenol based resins and xylene based resins.

In addition to the compounds mentioned above, it is also possible to add inorganic compounds such as titanium oxide, alumina, colloidal silica, kaolin, and talc and organic compounds such as metal salts of stearic acid, paraffin, natural wax, synthesized wax, natural resins and polystyrene powder to the thermosensitive adhesive composition of the present invention. A dispersing agent, an antifoaming agent, and a thickening agent can be used, if desired.

In addition, specific examples of the thermoplastic resins for use in the undercoating layer provided between the thermosensitive adhesive composition layer of the present invention and a substrate include but are not limited to resins, for example, copolymers of esters of (meth)acrylic acid, styrene-isoprene copolymers, copolymers of esters of styrene and acrylic acid, styrene and butadiene copolymers, acrylonitrile butadiene copolymers, copolymers of vinyl acetate and esters of acrylic acid, copolymers of ethylene and esters of acrylic acid, and copolymers of vinyl acetate, ethylene and esters of acrylic acid. Fillers can be contained, if desired. For example, specific examples thereof include fine powder or hollow fillers of organic or inorganic materials such as calcium carbonate, silica, titanium oxide, aluminum hydroxide, clay, baked clay, magnesium silicate, magnesium carbonate, white carbon,zinc oxide,bariumsulfonate, surface-treated calcium carbonate or silica, urea-formalin resin, copolymers of styrene and methacrylic acid and polystyrene.

With regard to the thermosensitive recording layer in the present invention, it is possible to form a thermosensitive recording layer containing a leuco dye and a coloring developing agent on a substrate.

Known leuco dyes can be used as the leuco dyes for use in the thermosensitive recording layer in the present invention. For example, triphenyl methane based dyes, fluoran based dyes, phenothiadine based dyes,auramine based dyes,spiropyran based dyes,and indolinophthalide based dyes can be used. Specific example of the leuco dyes include 3,3-bis(p-dimethylaminophenyl)phthalide, 3,3-bis(p-dimethylaminopnehyl)-6-dimethylaminophthalide (also named as crystal violet lactone), 3,3-bis(p-dimethylaminophenyl)-6-diethylaminophthalide, 3,3-bis(p-dimethylaminophenyl)-6-chlorophthalide, 3,3-bis(p-dibutylaminophenyl)phthalide, 3-cyclohexylamino-6-chlorofluoran, 3-dimethylamino-5,7-dimethylfluoran, 3-diethylamino-7-chlorofluoran, 3-diethylamino-7-methylfluoran, 3-diethylamino-7,8-benzofluoran, 3-diethylamino-6-methyl-7-chlorofluoran, 3-(N-p-tolyl-N-ethylamino)-6-methyl-7-anilinofluoran, 3-pyrrolidino-6-methyl-7-anilinofluoran, 2-{N-(3'-trifluoromethylphenyl)amino}-6-diethylamino fluoran, 2-{3,6-bis(diethylamino)-9-(o-chloroanilino)xanthyl} benzoic acid lactam, 3-diethylamino-6-methyl-7-(m-trichloromethylanilino)fluoran, 3-diethylamino-7-(o-chloroanilino)fluoran, 3-dibutylamino-7-(o-chloroanilino)fluoran, 3-N-methyl-N-amylamino-6-methyl-7-anilinofluoran, 3-N-methyl-N-cyclohexylamino-6-methyl-7-anilinofluoran, 3-diethylamino-6-methyl-7-anilinofluoran, 3-(N,N-diethylamino)-5-methyl-7-(N,N-dibenzylamino)fluoran, benzoylleuco methyleneblue, 6'-chloro-8'-methoxybenzoindolino pyrylospirane, 6'-bromo-3'-methoxybenzoindolinopyrylospirane, 3-(2'-hydroxy-4'-dimethylaminophenyl)-3-(2'-methoxy-5'-chlorophenyl)phthalide, 3-(2'-hydroxy-4'-dimethylaminophenhyl)-3-(2'-methoxy-5'-nitrophenyl)phthalide, 3-(2'-hydroxy-4'-dimethylaminophenyl)-3-(2'-methoxy-5'-methylphenyl)phthalide, 3-diethylamino-6-methyl-7-(2',4'-dimethylanilino)fluoran, 3-(2'-methoxy-4'-dimethylaminophenyl)-3-(2'hydroxy-4'-chloro-5'-methylphenyl)phthalide, 3-morpholino-7-(N-propyltrifluoromethyl anilino)fluoran, 3-diethylamino-5-chloro-7-(N-benzyltrifluoromethyl anilino) fluoran, 3-pyrrolidino-7-(di-p-chlorophenyl)methylaminofluoran, 3-diethylamino-5-chloro-7-(α-phenylethylamino)fluoran, 3-(N-ethyl-p-toluidino)-7-(α-phenylethylamino)fluoran, 3-diethylamino-7-(o-methoxycarbonylphenyl amino)fluoran, 3-diethylamino-5-methyl-7-(α-phenylethylamino)fluoran, 3-diethylamino-7-piperidino fluoran, 2-chloro-3-(N-methyltoluidino)-7-(p-n-butylanilino)fluoran, 3-(N-benzyl-N-cyclohexylamino)-5,6-benzo-7-α-naphthylamino-4'-bro mofluoran, 3-diethylamino-6-methyl-7-mesidino-4',5'-benzofluoran, 3-diethylamino-6-methyl-7-(2',4'-dimethylanilino)fluoran, 3-(p-dimethylaminophenyl)-3-{1,1-bis(p-dimethylaminophenyl)ethyle ne-2-yl}phthalide, 3-(p-dimethylaminophenyl)-3-{1,1-bis(p-dimethylaminophenyl)ethyle ne-2-yl}-6-dimethylaminophthalide, 3-(p-dimethylaminophenyl)-3-(1-p-dimethylaminophenyl-1-phenylethylene-2-yl)phthalide, 3-(p-dimethylaminophenyl)-3-(1-p-dimethylamninophenyl-1-p-chlorophenyl ethylene-2-yl)-6-dimethylaminophthalide, 3-(4-dimethylamino-2'-methoxy)-3-(1"-p-dimethylaminophenyl-1"-p-c hlorophenyl-1", 3"-butadiene-4"-yl)benzophthalide, 3-(4'-dimethylamino-2'-benzyloxy)-3-(1"-p-dimethylamino phenyl-1"-phenyl-1",3"-butadiene-4"-yl)benzophthalide, 3-dimethylamino-6-dimethylaminofluorene-9-spiro-3'-(6'-dimethylam ino)phthalide, 3,3-bis{2-(p-dimethylaminophenyl)-2-(p-methoxyphenyl) ethenyl}-4,5,6,7-tetrachlorophthalide, 3,3-bis{1,1-bis(4-pyrrolidinophenyl)ethylene-2-yl}-5,6-dichloro-4,7-dibromophthalide, bis(p-dimethylaminostyryl)-1-naphthalene sulfonylmethane, 3-(N-methyl-N-propylamino)-6-methyl-7-anilinofluoran, 3-diethylamino-6-methyl-7-anilinofluoran, 3,6-bis(dimethylamino)fluoranspiro(9,3')-6'-dimethylamino phthalide, 3-diethylamino-6-chloro-7-anilinofluoran, 3-{N-ethyl-N-(2-ethoxypropyl)amino}-6-methyl-7-anilino fluoran, 3-{N-ethyl-N-tetrahydrofurfurylamino}-6-methyl-7-anilino fluoran, 3-diethylamino-6-methyl-7-mesidino-4',5'-benzofluoran, 3-(N-methyl-N-isobutylamino)-6-methyl-7-anilinofluoran, and 3-(N-ethyl-N-isoamylamino)-6-methyl-7-anilinofluoran.

Phenol compounds, thiophenol compounds, thiourea derivatives, organic acids and electron-accepting compounds such as metal salts thereof can be used as the coloring developing agents.

Specific examples of such coloring developing agents include 4,4'-isopropylidene bisphenol, 3,4'-isopropylidene bisphenol, 4,4'-isopropylidenebis(o-methylphenol), 4,4'-s-butylidenebisphenol, 4,4'-isopropylidenebis(o-t-butylphenol), 4,4'-cyclohexylidenediphenol, 4,4'-isopropylidenebis(2-chlorophenol), 2,2'-methylenebis(4-methyl-6-t-butylphenol), 2,2'-methylenebis(4-ethyl-6-t-butylphenol), 4,4'-butylidenebis(6-t-butyl-2-methyl)phenol, 1,1,3-tris(2-methyl-4-hydroxy-5-t-butylphenyl)butane, 1,1,3-tris(2-methyl-4-hydroxy-5-cyclohexylphenyl)butane, 4,4'-thiobis(6-t-butyl-2-methyl)phenol, 4,4'-diphenolsulfone, 4,2'-diphenolsulfone, 4-isopropoxy-4'-hydroxydiphenylsulfone, 4-benzyloxy-4'-hydroxydiphenylsulfone, 4,4'-diphenolsulfoxide, p-hydroxyisopropyl benzoate, p-hydroxybenzyl benzoate, benzyl protocatechuic acid, stearyl gallate, lauryl gallate, octyl gallate, 1,7-bis(4-hydroxyphenylthio)-3,5-dioxaheptane, 1,5-bis(4-hydroxyphenylthio)-3-oxaheptane, 1,3-bis(4-hydroxyphenylthio)-propane, 2,2-methylenebis(4-ethyl-6-t-butylphenol), 1,3-bis(4-hydroxyphenylthio)-2-hydroxypropane, N,N'-diphenylthio urea, N,N'-di(m-chlorophenyl)thiourea, salicylanilide, 5-chlorosalicylanilide, salicyl-o-chloroanilide, 2-hydroxy-3-naphthoic acid, antipyrin complex of zinc thiocyanate, zinc salt of 2-acetyloxy-3-naphthoic acid, 2-hydroxy-1-naphthoic acid, 1-hydroxy-2-naphthoic acid, metal salts such as zinc salts, aluminum salts and calcium salts of hydroxy naphthoic acid, bis(4-hydroxyphenyl)methyl acetate, bis(4-hydroxyphenyl)benzyl acetate, 4-{β-(p-methoxyphenoxy)ethoxy}salicylic acid, 1,3-bis(4-hydroxycumyl)benzene, 1,4-bis(4-hydroxycumyl)benzene, 2,4'-diphenolsulfone, 3,3'-diallyl-4,4'-diphenolsulfone, α,α-bis(4-hydroxyphenyl)-α-methyltoluene, tetrabromobisphenol A, tetrabromobisphenol S, 4,4'-thiobis(2-methylphenol), 3,4-dihydroxy-4'-methyldiphenylsulfone, and 4,4'-thiobis(2-chlorophenol).

In the present invention, various kinds of known binder resins can be used to form the thermosensitive recording layer. Specific examples of the binder resins include polyvinyl alcohols; amylum and its derivatives; cellulose derivatives such as hydroxymethyl cellulose, hydroxyethyl cellulose, carboxymethyl cellulose, methyl cellulose and ethyl cellulose; water-soluble polymers such as sodium polyacrylate, polyvinyl pyrrolidone, ester copolymers of acrylamide-acrylic acid, copolymers of acrylamide-ester of acrylic acid and methacrylic acid, metal salts of copolymers of styrene-maleic anhydride, metal salts of copolymers of isobutylene and maleic anhydride, polyacryl amide, sodium algin acid, gelatin and casein; polyvinyl acetate, polyurethane, esters of polyacrylic acid, esters of polymethacrylic acid, butyl polymethacrylic acid, copolymers of vinyl chloride and vinyl acetate, copolymers of ethylene and vinyl acetate, copolymers of styrene and butadiene, and styrene-butadiene-acrylic based copolymers.

In addition, to form the thermal recording layer in the present invention, it is possible to use various kinds of thermally fusible materials as loading fillers. Specific examples thereof include aliphatic acids, for example, stearic acid and behenic acid; aliphatic acid amides, for example, stearic acid amides and palmitic acid amides; metal salts of aliphatic acids, for example, zinc stearate, aluminum stearate, calcium stearate, zinc palmitate and zinc behenate; p-benzylbiphenyl, terphenyl, triphenyl methane, p-benzyloxy benzyl benzoate, β-benzyloxynaphthalene, β-phenyl naphthoate, 1-hydroxy-2-phenyl naphthoate, 1-hydroxy-2-methyl naphthoate, diphenyl carbonate, dibenzyl terephthalate, dimethyl terephthalate, 1,4-dimethoxynaphthalene, 1,4-diethoxynaphthalene, 1,4-dibenzyloxynaphthalene, 1,2-bis(phenoxy)ethane, 1,2-bis(3-methylphenoxy)ethane, 1,2-bis(4-methylphenoxy)ethane, 1,4-bis(phenoxy)butane, 1,4-bis(phenoxy)-2-butene, 1,2-bis(4-methoxyphenylthio)ethane, dibenzoyl methane, 1,4-bis(phenylthio)butane, 1,4-bis(phenylthio)-2-butene, 1,2,-bis(4-methoxyphenylthio)ethane, 1,3-bis(2-vinyloxyethoxy)benzene,1,4-bis(2-vinyloxyethoxy)benzene, p-(2-vinyloxyethoxy)biphenyl, p-aryloxybiphenyl, p-propargyloxy biphenyl, dibenzoyloxymethane, 1,3-dibenzoyloxy propane, dibenzyl disulfide, 1,1-diphenyl ethanol, 1,1-dophenyl propanol, p-(benzyloxy)benzyl alcohol, 1,3-diphenoxy-2-propanol, N-octadecyl carbamoyl-p-methoxycarbonyl benzene, N-octadecylcarbamoyl benzene, dibenzyl oxalate, and 1,5-bis(p-methoxyphenyloxy)-3-oxapentane.

Further, in the present invention, additive components, for example, surfactants and lubricants, which are typically used for this kind of thermal recording layer, can be used in combination. As lubricants, higher aliphatic acids and their metal salts, higher aliphatic acid amides, higher aliphatic acid esters, and various kinds of waxes, for example, vegetable waxes, animal waxes, mineral waxes and oil waxes, may be used.

The thermosensitive recording layer in the present invention can be formed by a known method.

For example, leuco dyes and coloring developing agents are separately pulverized and dispersed together with a binder aqueous solution by a dispersing device, e.g., a ball mill, an attritor and a sand mill to obtain dispersion particles having a particle diameter of from 1 to 3 µm. Thereafter, a liquid of application of a thermosensitive recording layer is prepared by mixing these pulverized and dispersed materials in a known prescription. A liquid dispersion of loading fillers, thermally fusing materials (i.e., sensitizers), etc. can be mixed, if desired. The obtained liquid of application is applied to a substrate to form a thermosensitive recording layer.

In the present invention, the top and the bottom of a substrate are referred to as the first side and the second side thereof, respectively. The first side is a side on which a thermosensitive adhesive composition layer is formed and the second side is a side on which a thermorecording layer is formed.

Base paper used as the substrate related to the present invention is mainly formed of wood pulp and a loading filler. Specific examples of wood pulp include chemical wood pulp, for example, LBPK and NBPK, mechanical pulp, for example, GP, PGW, RMP, TMP, CTMP, CMP and CGP, and recycled pulp, for example, DIP. Known pigments, binders and various kinds of additives, for example, sizing agents, fixing agents, yield ratio improving agents, cationizing agents and paper durability improving agents, can be admixed alone or in combination. The substrate can be manufactured by various kinds of machines, for example, a fourdrinier, a cylinder paper machine and a twin wire paper machine. Paper can be made in acidity, alkalinity and neutrality.

This base paper can be subject to on-machine treatment by calendering equipment including a metal roll and synthesized resin roll. Also, it is possible to perform off-machine treatment and subsequent to the treatment, calendering treatment can be performed by a machine calender, a super calender, etc., to control the flatness of the paper.

Specific examples of loading fillers contained in the base paper include white inorganic pigments,for example,light calcium carbonate, heavy calcium carbonate, kaolin, talc, calciumsulfate,bariumsulfate, titanium dioxide, zinc oxide, zinc sulfide, satin white, aluminum silicate, diatom earth, calcium silicate, magnesium silicate, synthesized silica, aluminum hydroxide, alumina, lithopone, zeolite, magnesium carbonate, and magnesium hydroxide, and organic pigments, for example, styrene based plastic pigments, acryl based plastic pigments, polyethylene, microcapsule, urea resins and melamine resins.

Specific examples of the sizing agents include rosin sizing agents for acid paper, modified rosin sizing agents for neutral paper, AKD, ASA, and cation polymer type sizing agents. Specific examples of paper durability improving agents include polyamide-polyamine-epichlorohydrin, urea-formaldehyde resins, melamine-formaldehyde resins, polyethylene imines, polyacryl amides, various kinds of modified amylum, vegetable gum, and CMC.

Glassine paper, art paper, coated paper and cast paper can be used as the substrate for use in the present invention typical paper, if desired. Rawmaterials, for example, loading fillers, sizing agents, paper durability improving agents and dyes, which are typically used for paper, can be used, if desired.

It is also possible to use plastic sheets of, for example, polyethylene, polypropylene, polyethylene terephthalate or polyamides, synthesized paper and unwoven fabric made of these synthesized fabric, laminate paper in which a synthesized resin is laminated on one or both sides of paper, metal foil, metal foil and paper, deposition paper, non-transparent sheet treated by hologram, paper bonded with a synthesized resin film, mica paper, and glass paper.

In a method of providing a thermorecording layer of the thermosensitive recording materials for use in the present invention, an intermediate layer, a protective layer and a thermosensitive adhesive layer, known devices, for example, a blade coater, a gravure coater, a gravure offset coater, a bar coater, a roll coater, a knife coater, an air knife coater, a comma coater, a U comma coater, an AKKU coater, a smoothing coater, a microgravure coater, a reverse roll coater, a 4 or 5 roll coater, a dip coater, a falling curtain coater, a slide coater and a dye coater, and various kinds of printing machines, for example, a flexographic printing machine, a relief printing machine, a gravure printing machine, and an offset printing machine can be used for application and printing. Drying during application or printing to a substrate is performed in a temperature range in which a solid plasticizing agent used is not fused. A drying method in which infrared light, microwave or high frequency is used as a heat source can be used in addition to hot air drying.

A pre-printing layer can be formed on the other side (surface) of the thermosensitive adhesive composition layer of the thermosensitive recording material, if desired. It is also possible to provide an eye mark printing serving as a sensing means on the surface or the thermosensitive adhesive layer side. Both can be printed using a known printing method, for example, a UV printing (using, for example, UV curable ink) an EB printing and a flexography printing.

Further, the thermosensitive adhesive label sheet formed using the thermosensitive adhesive composition of the present invention can be rolled round a known core material to form a roll form. Also, the thermosensitive adhesive label sheet can be rolled up without a core material.

Having generally described preferred embodiments of this invention, further understanding can be obtained by reference to certain specific examples which are provided herein for the purpose of illustration only and are not intended to be limiting. In the descriptions in the following Examples, the numbers represent weight ratios in parts, unless otherwise specified.

### EXAMPLES

The present invention is described in detail with reference to Examples but not limited thereto.

### Example 1

### (1) Preparation of liquid dispersion of dye

Disperse the following components by a sand mill to obtain particles having an average particle diameter of 0.5 µm:

| | |
|---|---|
| 3-dibutylamino-6-methyl-N-7-anilino fluoran | 20 parts |
| 10 % aqueous solution of polyvinyl alcohol (PVA) | 20 parts |
| water | 60 parts |

### (2) Preparation of liquid dispersion of coloring developing agent

Disperse the following component by a ball mill to obtain particles having an average particle diameter of 0.5 µm:

| | |
|---|---|
| 4-isopropoxy-4'-hydroxydiphenylsulfon | 20 parts |
| Di-(p-methylbenzyl)oxalate | 10 parts |
| Calcium carbonate | 10 parts |
| 10 % aqueous solution of polyvinyl alcohol (PVA) | 30 parts |
| Water | 30 parts |

### (3) Preparation of liquid of application for thermosensitive recording layer

Mix the following components to prepare a liquid of application for a thermosensitive recording layer:

| | |
|---|---|
| Liquid dispersion of dye | 20 parts |
| Liquid dispersion of coloring developing agent | 60 parts |
| 10 % aqueous solution of polyvinyl alcohol (PVA: KL-318, manufactured by Kuraray Co., Ltd.) | 30 parts |
| Dioctylsulfo succinic acid aqueous solution (solid portion: 5 %) | 1 part |

### (4) Preparation of liquid of application for protective layer

Mix the following component to prepare a liquid of application for protective layer:

| | |
|---|---|
| Liquid dispersion of aluminum hydroxide (solid portion: 50 %) | 40 parts |
| Liquid dispersion of zinc stearate (solid portion: 30 %) | |
| Dioctylsulfo succinic acid aqueous solution (solid portion: 5 %) | 1 part |
| 10 % aqueous solution of polyvinyl alcohol having a diacetone group (content of diacetone monomer unit: 4%, polymerization degree: 1, 600, saponification ratio: 98 %, manufactured by Shin-Etsu Chemical Co., Ltd.) | 200 parts |
| 10 % aqueous solution (solid portion: 10%) of adipic acid hydrazide (cross-linking agent) | 10 parts |
| Water | 43 parts |

### (5) Application of thermosensitive recording layer and protective layer

Apply and dry the liquid of application of thermorecording layer to a substrate (quality paper having a grammage of about 60 g/m²) such that the weight of the dried dye attached thereto is about 0.6 g/m² to form a thermosensitive recording layer. Subsequently, apply and dry the liquid of application of protective layer on the thermosensitive recording layer such that the weight of the dried material attached thereto is about 3 g/m² and perform calender treatment to form a protective layer having a smoothness of 5,000 seconds.

### (6) Preparation of liquid dispersion of solid plasticizing agent

Uniformly mix the following component and disperse the mixture by a ball mill to obtain a liquid dispersion of a solid plasticizing agent in which particles have an average particle diameter of 1.0 µm:

| | |
|---|---|
| 2-(3'-t-butyl-5'-methyl-2'-hydroxyphenyl)-5-chloro benzotriazole | 100 parts |
| 10 % aqueous solution of sulfonic acidmodifiedpolyvinyl alcohol (L-3266, manufactured by Nippon Synthetic Chemical Industry Co., Ltd., weight average molecular weight: 15,000, saponification ratio: 88 %) | 20 parts |
| Surfactant (Newcol-290M, manufactured by Nippon Nyukazai Co., Ltd.) | 0.5 parts |
| Water | 200 parts |

Observe the status of the liquid dispersion in the dispersion process with a naked eye and further confirm the stability of the liquid dispersion after dispersion by a homomixer (10, 000 rpm for 5 minutes, manufactured by Primix Corporation).

### (7) Preparation of thermosensitive adhesive liquid

Sufficiently stir and mix the following component to prepare a thermosensitive adhesive liquid:

| | |
|---|---|
| Thermoplastic resin Emulsion AP5570 (main component: acrylic acid-2-hexyl resin, solid portion 55 %, glass transition temperature 65 °C, manufactured by Showa Highpolymer Co.,Ltd. ) | 100 parts |
| Adhesiveness improving agent E100 (main component: terpene phenol, solid portion 50 %, softening point: 145 °C, manufactured by Arakawa Chemical Industries Ltd.) | 70 parts |
| Liquid dispersion of solid plasticizing agent mentioned above: | 540 parts |
| Water | 130 parts |

### (8) Application of thermosensitive adhesive liquid

Apply and dry the thermosensitive adhesive liquid to the other side of the thermosensitive recording layer mentioned in (5) such that the content of dried attached material is 15 g/m² to obtain the thermosensitive recording composition of the present invention.

### Example 2

Another thermosensitive recording composition of the present invention is obtained in the same manner as described in Example 1 except that the dispersing agent for the solid plasticizing agent in (6) in Example 1 is changed to polyvinyl alcohol (GL-05, manufactured by Nippon Synthetic Chemical Industry Co., Ltd., weight average molecular weight: 11,000, saponification ratio: 88 %).

### Example 3

Another thermosensitive recording composition of the present invention is obtained in the same manner as described in Example 1 except that the dispersing agent for the solid plasticizing agent in (6) in Example 1 is changed to polyvinyl alcohol (weight average molecular weight: 39,000, saponification ratio: 88 %).

### Example 4

Another thermosensitive recording composition of the present invention is obtained in the same manner as described in Example 2 except that the dispersing agent for the solid plasticizing agent in (6) in Example 1 is changed to acetoacetyl modified polyvinyl alcohol (Z-100, manufactured by Nippon Synthetic Chemical Industry Co., Ltd., weight average molecular weight: 29,000, saponification ratio: 99 %).

### Example 5

Another thermosensitive recording composition of the present invention is obtained in the same manner as described in Example 1 except that the number of parts of the dispersing agent for the solid plasticizing agent in (6) in Example 1 is changed to 100 parts.

### Example 6

Another thermosensitive recording composition of the present invention is obtained in the same manner as described in Example 1 except that the thermoplastic resin emulsion mentioned in (7) of Example 1 is changed to a copolymer emulsion of 2-ethylhexyl acrylate, methyl acrylate and styrene (manufactured by Showa Highpolymer Co., Ltd., solid portion density: 55.4 %, glass transition temperature: -5 °C).

### Example 7

### (9) Preparation of liquid dispersion for hollow filler

Stir and disperse the following composition to prepare a liquid dispersion for hollow filler:

| | |
|---|---|
| Plastic spherical hollow particle(Matsumoto microsphere R-300: copolymer of acrylonitrile/methacrylonitrile/isobonyl methacrylate, solid density: 33 %, average particle diameter: 3.0 µm, hollow ratio: 90 %, manufactured by Matsumoto Yushi-seiyaku Co., Ltd.) | |
| Surfactant (Dapro W-77, manufactured by Elmentis plc.) | 1.6 parts |
| Water | 74.4 parts |

### (10) Preparation of liquid of application for undercoating layer

Stir the following components to obtain liquid of application for undercoating layer:

| | |
|---|---|
| Thermoplastic resin emulsion AP5570 (main component: acrylic acid-2-hexyl resin, solid portion 65 %, glass transition temperature 65 °C, manufactured by Showa Highpolymer Co., Ltd.) | |
| Liquid dispersion for hollow filler | 160 parts |

Apply and dry the liquid dispersion between the substrate and the thermosensitive adhesive layer of Example 1 such that the content of dried attached material is 4 g/m² to obtain the thermosensitive recording composition of the present invention.

### Example 8

Another thermosensitive recording composition of the present invention is obtained in the same manner as in Example 2 except that the liquid dispersion for undercoating layer is applied and dried between the substrate and the thermosensitive adhesive layer such that the content of dried attached material is 4 g/m².

### Example 9

Another thermosensitive recording composition of the present invention is obtained in the same manner as in Example 7 except that the dispersing agent for the solid plasticizing agent described in (6) of Example 1 is changed to polyvinyl alcohol (PVA-103, manufactured by Kuraray Co., Ltd., weight average molecular weight: 15,000, saponification ratio: 99 %).

### Example 10

Another thermosensitive recording composition of the present invention is obtained in the same manner as in Example 7 except that the dispersing agent for the solid plasticizing agent described in (6) of Example 1 is changed to polyvinyl alcohol (PVA-205, manufactured by Kuraray Co., Ltd., weight average molecular weight: 27,000, saponification ratio: 88 %).

### Example 11

Another thermosensitive recording composition of the present invention is obtained in the same manner as in Example 7 except that the thermoplastic resin emulsion described in (7) of Example 1 is changed to ethylene vinyl acetate copolymer emulsion (FREX751, manufactured by Sumitomo Chemical Co., Ltd., solid portion: 50 weight %, glass transition temperature: -15 °C).

### Example 12

Another thermosensitive recording composition of the present invention is obtained in the same manner as in Example 7 except that the solid plasticizing agent described in (6) of Example 1 is changed to 4, 4'-thiobis-(6-t-butyl-3-methylphenol) (NOCRAC 300, manufactured by Ouchi Shinko Chemical Industrial).

### Example 13

Another thermosensitive recording composition of the present invention is obtained in the same manner as in Example 7 except that the solid plasticizing agent described in (6) of Example 1 is changed to tris(p-t-buthoxyphenyl)phosphine (TTBPP, manufactured by Hokko Chemical Industry Co., Ltd.).

### Example 14

Another thermosensitive recording composition of the present invention is obtained in the same manner as in Example 7 except that the adhesiveness improving agent described in (7) of Example 1 is changed to E720 (main component: special rosin ester, manufactured by Arakawa Chemical Industry Ltd., softening point: 100 °C).

### Example 15

Another thermosensitive recording composition of the present invention is obtained in the same manner as in Example 7 except that the adhesiveness improving agent described in (7) of Example 1 is changed to LP-325 (main component: terpene phenol, manufactured by Harima Chemicals, Inc., softening point: 130 °C).

### Comparative Example 1

Another thermosensitive recording composition of the present invention is obtained in the same manner as in Example 1 except that the dispersing agent for the solid plasticizing agent described in (6) of Example 1 is changed to polyvinyl alcohol (weight average molecular weight: 8,000, saponification ratio: 88%).

### Comparative Example 2

Another thermosensitive recording composition of the present invention is obtained in the same manner as in Example 1 except that the dispersing agent for the solid plasticizing agent described in (6) of Example 1 is changed to itaconic acid modified polyvinyl alcohol (KL-318, manufactured by Kuraray Co., Ltd., weight average molecular weight: 80,000, saponification ratio: 88%).

### Comparative Example 3

Another thermosensitive recording composition of the present invention is obtained in the same manner as in Example 7 except that the dispersing agent for the solid plasticizing agent described in (6) of Example 1 is changed to itaconic acid modified polyvinyl alcohol (KL-318, manufactured by Kuraray Co., Ltd., weight average molecular weight: 80,000, saponification ratio: 88%).

### Adhesibility

Some of the thermosensitive recording compositions prepared in Examples and Comparative Examples are preserved in a standard environment (23 °C and 65 % RH) for one day. The others thereof are preserved in a drying environment (40 °C) for 7 days. Both preserved portions are cut to the size having a width of 4 cm and a length of 10 cm. The thermosensitive adhesive layer side is activated by contacting a thermal head (manufactured by TEC Co., Ltd.): 8 dot/mm) under the following condition: resistance: 500 Ω, all dot energization, activation energy: 26.0 mJ/mm², printing speed 100 mm/s, pressure of platen roll having a diameter of 1 cm: 6 kgf/line. The thermosensitive adhesive layer side is attached to a corrugated cupboard under a pressure of 2 kg by a rubber roller in the longitudinal direction. Two minutes thereafter, the thermosensitive adhesive layer is peeled with a peeling angle of 180 ° and peeling speed of 300 mm/min. The adhesibility when the thermosensitive adhesive layer is peeled is measured by a force gauge. Data are read by an interval of 0.1 seconds. The obtained values are averaged and ranked according to the criterion shown in Table 1. This test is performed under the standard environment (23 °C and 65 % RH) .

### Anti-blocking property

Contact the protective layer and the thermosensitive adhesive composition layer side of the thermosensitive recording layer of a same sample and perform a test for 24 hours under the drying condition of a pressure of 200 g/cm² and a temperature of 50 °C. Leave the sample at room temperature and peel the sample. Evaluate the anti-blocking property at the time according to the criteria shown in Table 2. The criteria items Adhesion, Peeling noise, Dotted transfer and Stripping represent the degree of blocking and the degree worsens according to this order. Adhesion represents a state in which the material (paper) is slightly attached to each other even when adhesibility is not provided thereto. Self weight in Adhesion represents a state in which when two sheets of paper are overlapped and the upper paper is lifted, the two sheets of paper are naturally separated. Peeling noise represents the noise made when the upper sheet is separated. Dotted transfer represents the status in which the thermosensitive adhesive layer is transferred to the reverse side in a dot manner. Stripping represents a phenomenon in which the thermosensitive adhesive layer is attached to the reverse side so that the thermosensitive adhesive layer is peeled or the paper (reverse side) is peeled or torn.

The measuring results and their evaluation results of Examples 1 to 15 and Comparative Examples 1 to 3 with regard to the dispersability of the solid plasticizing agent, the adhesibility to the corrugated board and the anti-blocking property are shown in Table 3.

**Table 1**

| Adhesibility to corrugate board | |
|---|---|
| E (Excellent) | Not less than 1,000 |
| G (Good) | From 500 to less than 1,000 |
| F (Fair) | From 100 to less than 500 |
| P (Poor) | From 50 to less than 100 |
| B (Bad) | Less than 50 |

**[Table 2]**

| Anti-blocking property | | | | | |
|---|---|---|---|---|---|
| | Ranking | Adhesion | Peeling noise | Dotted transfer | Stripping |
| E (Excellent) | 10 | Self weight | | | |
| | 9 | Slightly | No noise | | |
| G (Good) | 8 | Yes | Slight noise | | |
| | 7 | | Yes | | |
| F (Fair) | 6 | | | Partially | |
| | 5 | | | 30 to 50 % | |
| | 4 | | | 50% to all | |
| P (Poor) | 3 | | | | Partially |
| | 2 | | | | 30 to 50 % |
| | 1 | | | | 50% to all |

**[Table 3]**

| | Dispersability of solid plasticizing agent | Adhesibility to corrugated board (gf/40 mm) | | | | Anti-blocking | |
|---|---|---|---|---|---|---|---|
| | | Measured after 2 minutes | | Measured after 7 days left at 40 °C | | property | |
| Example 1 | Excellent | 850 | G | 770 | G | 9 | E |
| Example 2 | Excellent | 840 | G | 810 | G | 8 | G |
| Example 3 | Excellent | 770 | G | 720 | G | 9 | E |
| Example 4 | Excellent | 710 | G | 670 | G | 9 | E |
| Example 5 | Excellent | 700 | G | 630 | G | 7 | G |
| Example 6 | Excellent | 690 | G | 490 | F | 10 | E |
| Example 7 | Excellent | 1330 | E | 1170 | E | 10 | E |
| Example 8 | Excellent | 1220 | E | 1050 | E | 9 | E |
| Example 9 | Excellent | 1450 | E | 1560 | E | 9 | E |
| Example 10 | Excellent | 1050 | E | 1020 | E | 9 | E |
| Example 11 | Excellent | 920 | G | 880 | G | 10 | E |
| Example 12 | Excellent | 1140 | E | 1090 | E | 6 | F |
| Example 13 | Excellent | 1360 | E | 1400 | E | 10 | E |
| Example 14 | Excellent | 1110 | E | 980 | E | 6 | F |
| Example 15 | Excellent | 1320 | E | 1150 | E | 9 | E |
| Comparative Example 1 | Relatively bad | 530 | G | 480 | F | 3 | P |
| Comparative Example 2 | Excellent | 680 | E | 80 | P | 9 | E |
| Comparative Example 3 | Excellent | 740 | E | 70 | P | 9 | E |

As seen in the results shown in Table 3, in the thermosensitive adhesive compositions of the present invention of Examples 1 to 15 and the thermosensitive adhesive label sheet using these thermosensitive adhesive compositions, the dispersability of the solid plasticizing agents is relatively good in comparison with that in Comparative Example 1. In addition, when compared with Comparative Examples 1 to 3, the adhesibility and the anti-blocking property are maintained in Examples 1 to 15 over time after these label sheets are attached to a corrugated board.

## Claims

1. A thermosensitive adhesive composition comprising:
a thermoplastic resin;
an adhesiveness imparting agent; and
a solid plasticizing agent comprising a dispersing agent,
wherein the dispersing agent is a polyvinyl alcohol based resin having a weight average molecular weight of from 11,000 to 39,000.

2. The thermosensitive adhesive composition according to Claim 1, wherein a saponification ratio of the polyvinyl alcohol based resin is not less than 70 %.

3. The thermosensitive adhesive composition according to Claim 1 or 2, wherein the ratio of the dispersing agent is from 2 to 10 parts by weight based on 100 parts by weight of the solid plasticizing agent.

4. The thermosensitive adhesive composition according to any one of Claims 1 to 3, wherein the glass transition point of the thermoplastic resin is from - 65 to -5 °C.

5. A thermosensitive adhesive label sheet, comprising:
a substrate; and
the thermosensitive adhesive composition of any one of Claims 1 to 4 layered on a first side of the substrate.

6. The thermosensitive adhesive label sheet according to Claim 5, further comprising an undercoating layer comprising a thermoplastic resin provided between the thermosensitive adhesive composition and the substrate.

7. The thermosensitive adhesive label sheet according to Claim 5 or 6, further comprising a thermosensitive recording layer comprising a leuco dye and a coloring developing agent, provided on a second side of the substrate.

8. The thermosensitive adhesive label sheet according to Claim 5 or 6, wherein an ink image developed by an ultraviolet curable ink is provided on the second side of the substrate.

9. The thermosensitive adhesive label sheet according to any one of Claims 5 to 8, wherein the thermosensitive adhesive label sheet is rolled up.

10. The thermosensitive adhesive label sheet according to any one of Claims 5 to 8, wherein the thermosensitive adhesive label sheet is rolled round a core material.

## Patentansprüche

1. Wärmeempfindliche Klebstoffzusammensetzung, umfassend:
ein thermoplastisches Harz;
ein Klebfähigkeit verleihendes Mittel; und
einen festen Weichmacher, umfassend ein Dispergiermittel,
wobei das Dispergiermittel ein Harz auf Basis von Polyvinylalkohol mit einem Gewichtsmittel-Molekulargewicht von 11 000 bis 39 000 ist.

2. Wärmeempfindliche Klebstoffzusammensetzung gemäß Anspruch 1, wobei der Verseifungsgrad des Harzes auf Basis von Polyvinylalkohol nicht weniger als 70% beträgt.

3. Wärmeempfindliche Klebstoffzusammensetzung gemäß Anspruch 1 oder 2,
wobei der Anteil des Dispergiermittels 2 bis 10 Gewichtsteile bezogen auf 100 Gewichtsteile des festen Weichmachers beträgt.

4. Wärmeempfindliche Klebstoffzusammensetzung gemäß irgendeinem der Ansprüche 1 bis 3, wobei der Glasübergangspunkt des thermoplastischen Harzes -65 bis -5°C beträgt.

5. Wärmeempfindliche Klebetikettfolie, umfassend:
ein Substrat; und
die wärmeempfindliche Klebstoffzusammensetzung gemäß irgendeinem der Ansprüche 1 bis 4, die auf eine erste Seite des Substrates beschichtet ist.

6. Wärmeempfindliche Klebetikettfolie gemäß Anspruch 5, ferner umfassend eine ein thermoplastisches Harz umfassende Grundschicht, die zwischen der wärmeempfindlichen Klebstoffzusammensetzung und dem Substrat vorgesehen ist.

7. Wärmeempfindliche Klebetikettfolie gemäß Anspruch 5 oder 6, ferner umfassend eine einen Leukofarbstoff und einen farbgebenden Entwickler umfassende wärmeempfindliche Aufzeichnungsschicht, die auf einer zweiten Seite des Substrates vorgesehen ist.

8. Wärmeempfindliche Klebetikettfolie gemäß Anspruch 5 oder 6, wobei ein durch eine Ultraviolett-härtbare Farbe entwickeltes Farbbild auf der zweiten Seite des Substrates vorgesehen ist.

9. Wärmeempfindliche Klebetikettfolie gemäß irgendeinem der Ansprüche 5 bis 8, wobei die wärmeempfindliche Klebetikettfolie aufgewickelt ist.

10. Wärmeempfindliche Klebetikettfolie gemäß irgendeinem der Ansprüche 5 bis 8, wobei die wärmeempfindliche Klebetikettfolie um ein Kernmaterial herum gewickelt ist.

## Revendications

1. Composition adhésive thermosensible comprenant :
une résine thermoplastique ;
un agent communiquant un pouvoir adhésif ; et
un agent plastifiant solide comprenant un agent dispersant,
dans laquelle l'agent dispersant est une résine à base de poly(alcool vinylique) présentant un poids moléculaire moyen en poids de 11 000 à 39 000.

2. Composition adhésive thermosensible selon la revendication 1, dans laquelle un rapport de saponification de la résine à base de poly(alcool vinylique) n'est pas inférieur à 70 %.

3. Composition adhésive thermosensible selon la revendication 1 ou 2, dans laquelle le rapport de l'agent dispersant est de 2 à 10 parties en poids rapporté à 100 parties en poids de l'agent plastifiant solide.

4. Composition adhésive thermoplastique selon l'une quelconque des revendications 1 à 3, dans laquelle le point de transition vitreuse de la résine thermoplastique est de -65 à -5°C.

5. Feuille d'étiquette adhésive thermosensible comprenant :
un substrat ; et
le composition adhésive thermosensible selon l'une quelconque des revendications 1 à 4 mise en couche sur un premier côté du substrat.

6. Feuille d'étiquette adhésive thermosensible selon la revendication 5 comprenant de plus une couche de revêtement inférieur comprenant une résine thermoplastique fournie entre la composition adhésive thermosensible et le substrat.

7. Feuille d'étiquette adhésive thermosensible selon la revendication 5 ou 6 comprenant de plus une couche d'enregistrement thermosensible comprenant un colorant leuco et un agent révélateur colorant fournie sur un second côté du substrat.

8. Feuille d'étiquette adhésive thermosensible selon la revendication 5 ou 6, dans laquelle une image d'encre développée par une encre durcissable aux ultraviolets est fournie sur le second côté du substrat.

9. Feuille d'étiquette adhésive thermosensible selon l'une quelconque des revendications 5 à 8, dans laquelle la feuille d'étiquette adhésive thermosensible est enroulée.

10. Feuille d'étiquette adhésive thermosensible selon l'une quelconque des revendications 5 à 8, dans laquelle la feuille d'étiquette adhésive thermosensible est enroulée autour d'un matériau de noyau.
